# EUROPEAN PATENT APPLICATION

(11) **EP 4 201 893 A1**
(43) Date of publication of application: **28.06.2023**
(21) Application number: 21858326.8
(22) Date of filing: 18.08.2021
(51) Int. Cl.: C02F 1/58, C02F 1/70

(54) **METHOD AND APPARATUS FOR TREATING CYANOGEN-CONTAINING WATER**

(30) Priority: 19.08.2020 JP 2020138789
(71) Applicant: Kurita Water Industries Ltd., Tokyo 164-0001 (JP)
(72) Inventor: MOMOI, Kentarou, Tokyo 164-0001 (JP); ISHIMORI, Tomohiro, Tokyo 164-0001 (JP)
(74) Representative: Hoffmann Eitle
(86) International application number: PCT/JP2021/030131
(87) International publication number: WO 2022/039182

(57) **Abstract**

Cyanide-containing water including a metal cyano complex and including a large amount of inorganic carbon is highly treated stably and efficiently to obtain treated water of high water quality in which the total cyanide concentration is sufficiently decreased. A pH adjusting agent is added to cyanide-containing water including a metal cyano complex and including inorganic carbon at 100 mg-C/L or more in terms of TIC measurement value measured by a TOC meter described in section 22, JIS K0102 to adjust the pH to pH 7.5 or less, then a ferrous salt as a reducing agent is added, and a copper compound is added, and the insoluble salt of cyanide produced is separated.

## Description

### Technical Field

The present invention relates to a method and apparatus for treating cyanide-containing water in which cyanide-containing water including a metal cyano complex and including a large amount of inorganic carbon is highly treated stably and efficiently to obtain treated water of high water quality in which the total cyanide concentration is sufficiently decreased.

### Background Art

Conventionally, as methods for treating cyanide-containing water including free cyanide and a metal cyano complex, treatment with sodium hypochlorite (NaClO) under an alkaline condition (hereinafter referred to as "alkaline-hypo-treatment"), the Prussian blue method using ferrous sulfate, treatment for producing a poorly soluble salt using a copper(I) ion (hereinafter referred to as a "total cyanide method"), and the like have been performed (NPL1).

The alkaline-hypo-treatment is a treatment method in which as shown in the following reaction formulas, first, NaClO is added to free cyanide under an alkaline condition to form sodium cyanate (first stage), and further NaClO is added to finally decompose sodium cyanate into nitrogen gas (second stage).
First stage:

   NaCN + NaOCl → NaCNO + NaCl
Second stage:

   2NaCNO + 3NaOCl → N₂ + 3NaCl + 2NaHCO₃

   (NaHCO₃ <=> NaOH + CO₂)

This method has a treatment effect for free cyanide, but for metal cyano complexes such as ferrocyanide, a sufficient treatment effect is not obtained.

The Prussian blue method is a method involving adding ferrous sulfate to cyanide-containing water including ferrocyanide to form a poorly water-soluble metal cyano complex as shown in the following reaction formulas, and removing it.

3[Fe(CN)₆]⁴⁻ + 4Fe³⁺ → Fe₄[Fe(CN)₆]₃

ferri-ferro type (Prussian blue)

2[Fe(CN)₆]³⁻ + 3Fe²⁺ → Fe₃[Fe(CN)₆]₂

ferro-ferri type (Turnbull's blue)

[Fe(CN)₆]⁴⁻ + 2Fe²⁺ → Fe₂[Fe(CN)₆]

ferro-ferro type (Berlin white)

In the Prussian blue method, when the pH of water is higher than 6.0, the Fe²⁺ ion in ferrous sulfate becomes unstable, and easily forms Fe(OH)₃ hydroxide as in the following reaction formula, and therefore it is considered that it is necessary to treat water at pH 6.0 or less.

Fe₄[Fe(CN)₆]₃ + 12OH⁻→ 3[Fe(CN)₆]⁴⁻ + 4Fe(OH)₃

It is said that the Prussian blue method has a low effect on metal cyano complexes other than iron cyano complexes (metal cyano complexes such as zinc, copper, silver, and nickel cyano complexes) because of its reaction mechanism.

The total cyanide method includes a method involving adding a copper compound and a magnesium compound to cyanide-containing water to produce insoluble salts of cyanide in the presence of a reducing agent such as sodium bisulfite according to the following reaction formulas, and removing them (PTL1).

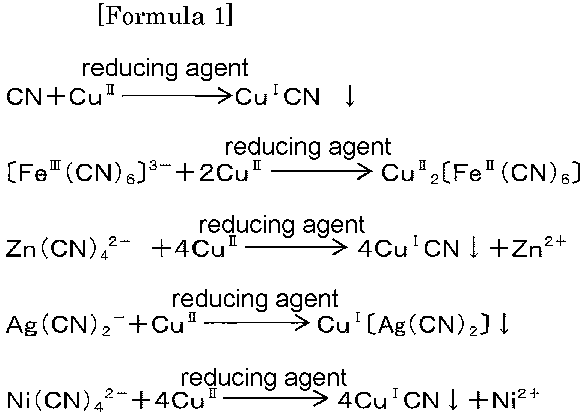

According to this method, for any metal cyano complex, a poorly soluble salt with Cu can be formed to stably treat cyanide.

As methods for treating cyanide-containing water using an iron compound and a copper compound in combination, the following methods are proposed.

PTL2: A method involving adding an iron compound such as ferrous sulfate and a copper compound such as copper sulfate to silver cyano complex-containing water and adjusting the pH to 3 to 8, and separating the produced poorly soluble silver cyano complex.

PTL3: A method involving adding a ferrous salt and a copper salt to iron cyano complex-containing water to produce a poorly soluble salt in the presence of a reducing agent other than a ferrous salt and a copper salt under an alkaline condition of pH 9 to 11, and separating the poorly soluble salt.

PTL4: A method involving adding a ferric salt and a cuprous salt to cyanide-containing water, then adjusting the pH to 6 to 8, and removing the produced water-insoluble salt.

### Citation List

### Patent Literature

PTL1: JP 2013-226510 A
PTL2: JPS 64-3553 B
PTL3: JPH 1-30693 A
PTL4: JP 2005-313112 A

### Non Patent Literature

NPL1: Yoshihiro Eto and Toshitsugu Nakahara, "Genba De Yakudatsu Muki Haisui Shori Gijutsu (Inorganic Wastewater Treatment Techniques Useful in the Field)" 1st ed., 2nd impression, Kogyo Chosakai Publishing Co., Ltd., May 13, 2007, p. 151-157

### Summary of Invention

### Technical Problem

It has not been possible to obtain a sufficient cyanide removal effect for cyanide-containing water including a metal cyano complex and including a large amount of inorganic carbon by any of the conventional treatment methods.

It is an object of the present invention to provide a method and apparatus for treating cyanide-containing water in which cyanide-containing water including a metal cyano complex and including a large amount of inorganic carbon is highly treated stably and efficiently to obtain treated water of high water quality in which the total cyanide concentration is sufficiently decreased.

### Solution to Problem

The present inventors have repeated studies in order to solve the problem, and as a result found that by adding a pH adjusting agent to cyanide-containing water including a metal cyano complex and including a large amount of inorganic carbon to previously adjust the pH to pH 7.5 or less, and then adding a ferrous salt and a copper compound for the reaction, an insoluble salt of cyanide can be efficiently produced to obtain treated water of high water quality in which the total cyanide concentration is sufficiently decreased.

The present invention has been achieved based on such a finding, and the following is the gist.
[1] A method for treating cyanide-containing water, including adding a pH adjusting agent to cyanide-containing water including a metal cyano complex and including inorganic carbon at 100 mg-C/L or more in terms of TIC measurement value measured by a TOC meter described in section 22, JIS K0102 to adjust pH to pH 7.5 or less; and then adding a ferrous salt as a reducing agent and adding a copper compound; and separating an insoluble salt of cyanide produced.
[2] An apparatus for treating cyanide-containing water, including: pH adjusting means that adds a pH adjusting agent to cyanide-containing water including a metal cyano complex and including inorganic carbon at 100 mg-C/L or more in terms of TIC measurement value measured by a TOC meter described in section 22, JIS K0102 to adjust pH to pH 7.5 or less; a reaction vessel in which a ferrous salt as a reducing agent is added to water having pH adjusted by the pH adjusting means, and a copper compound is added for a reaction; and solid-liquid separation means that separates an insoluble salt of cyanide produced in the reaction vessel.

### Advantageous Effects of Invention

According to the present invention, cyanide-containing water including a metal cyano complex and including a large amount of inorganic carbon can be highly treated stably and efficiently to obtain treated water of high water quality in which the total cyanide concentration is sufficiently decreased.

### Brief Description of Drawings

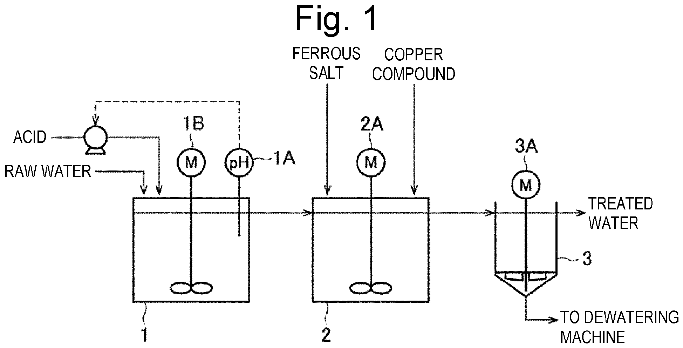

[Fig. 1] Figure 1 is a system diagram showing one example of an embodiment of an apparatus for treating cyanide-containing water according to the present invention.

### Description of Embodiments

Embodiments of a method and apparatus for treating cyanide-containing water according to the present invention will be described in detail below.

The method for treating cyanide-containing water according to the present invention is characterized by adding a pH adjusting agent to cyanide-containing water including a metal cyano complex and including inorganic carbon at 100 mg-C/L or more in terms of TIC measurement value measured by a TOC meter described in section 22, JIS K0102 to adjust the pH to pH 7.5 or less, then adding a ferrous salt as a reducing agent and adding a copper compound, and separating the insoluble salt of cyanide produced.

The apparatus for treating cyanide-containing water according to the present invention is characterized by including pH adjusting means that adds a pH adjusting agent to cyanide-containing water including a metal cyano complex and including inorganic carbon at 100 mg-C/L or more in terms of TIC measurement value measured by a TOC meter described in section 22, JIS K0102 to adjust the pH to pH 7.5 or less, a reaction vessel in which a ferrous salt as a reducing agent is added to the water having pH adjusted by the pH adjusting means, and a copper compound is added for the reaction, and solid-liquid separation means that separates the insoluble salt of cyanide produced in the reaction vessel.

### [Mechanism]

For cyanide-containing water including a metal cyano complex and including inorganic carbon at 100 mg-C/L or more in terms of TIC measurement value (hereinafter simply referred to as the "TIC value") measured by a TOC meter described in section 22, JIS K0102 (hereinafter sometimes referred to as "water to be treated according to the present invention"), a sufficient cyanide removal effect has not been obtained by conventional methods.

The water to be treated according to the present invention is usually weakly alkaline to alkaline at pH 8 to 10. By previously adding a pH adjusting agent to such cyanide-containing water to adjust the pH to pH 7.5 or less, and then adding a ferrous salt as a reducing agent and a copper compound, Fe²⁺ can stabilize to effectively exhibit the reducing action of the ferrous salt to stably and reliably produce an insoluble salt of cyanide, and a good cyanide removal effect can be obtained.

As a method for treating cyanide-containing water using an iron compound and a copper compound in combination, PTL2 proposes a method involving adding an iron compound such as ferrous sulfate and a copper compound such as copper sulfate to silver cyano complex-containing water and adjusting the pH to 3 to 8, and separating the produced poorly soluble silver cyano complex, but in PTL2, pH adjustment is performed simultaneously with the addition of the iron compound and the copper compound. In the method involving simultaneously performing the addition of the iron compound and the copper compound and pH adjustment in this manner, Fe²⁺ does not stabilize, and the ferrous salt can not be allowed to act as a reducing agent, and therefore an effect like that of the present invention cannot be obtained, and cyanide remains.

In the process of the study leading to the present invention, the present inventors have found that as shown in Comparative Examples 1 to 3 described later, when the total cyanide concentration of treated water obtained by performing cyanide removal treatment is determined, a correct analysis value can not be obtained when an interfering component (for example, sodium hyposulfite) for total cyanide analysis is included in sample water.

The present inventors have considered that for such sample water, it is effective for the grasp of correct total cyanide concentration to dilute the sample water to decrease the influence of the interfering component, then perform analysis, and multiply the obtained analysis value by the dilution factor to obtain the total cyanide concentration. The present inventors have also performed analysis for diluted sample water in Examples and Comparative Examples described later.

### [Method for Treating Cyanide-Containing Water]

### <Water To Be Treated according to Present Invention>

The water to be treated according to the present invention is cyanide-containing water which includes a metal cyano complex and in which the content of inorganic carbon is 100 mg-C/L or more as the TIC value. For cyanide-containing water in which the content of inorganic carbon is less than 100 mg-C/L as the TIC value, a sufficient cyanide removal effect can be obtained even without applying the present invention. In more effectively obtaining the effect of the present invention, the TIC value of the water to be treated according to the present invention is preferably 200 mg-C/L or more. On the other hand, when the TIC value is excessively high, a large amount of a pH adjusting agent such as H₂SO₄ is required, and there is an economical problem, and therefore the TIC value of the water to be treated according to the present invention is preferably 500 mg-C/L or less.

The M alkalinity of the water to be treated according to the present invention having such a TIC value is usually 400 mg-CaCOs/L or more, preferably 400 to 5000 mg-CaCOs/L, and more preferably 400 to 1000 mg-CaCOs/L. The M alkalinity of the water to be treated according to the present invention is determined by a method described in the Examples section described later.

The inorganic carbon included in the water to be treated according to the present invention is a carbonate ion (CO₃²⁻), a hydrogen carbonate ion (HCO₃⁻), and carbonic acid (H₂CO₃).

The metal cyano complex included in the water to be treated according to the present invention is not particularly limited, and examples thereof include iron cyano complexes, silver cyano complexes, nickel cyano complexes, copper cyano complexes, and zinc cyano complexes.

The water to be treated according to the present invention may include only one or two or more of these metal cyano complexes.

The water to be treated according to the present invention may include free cyanide in addition to the metal cyano complex.

The metal cyano complex content in the water to be treated according to the present invention is not particularly limited. The metal cyano complex content of the water to be treated according to the present invention is usually about 0.5 to 30 mg/L as concentration in terms of cyanide, and the total cyanide concentration of the water to be treated according to the present invention, including cyanide other than the metal cyano complex, such as free cyanide, is usually about 0.5 to 10 mg/L. The total cyanide concentration of the water to be treated according to the present invention is determined by a method described in the Examples section described later.

Examples of such water to be treated according to the present invention include plating plant wastewater, beneficiation and smelting treatment plant wastewater, city gas production plant wastewater, chemical plant wastewater, petroleum plant wastewater, gas plant wastewater, metal refining plant wastewater, wastewater from metal surface treatment plants in which chromate treatment and the like are performed, petroleum-coal pyrolysis process wastewater, photograph plant wastewater, drug plant wastewater, precious metal mining wastewater, plating wastewater, plating jig washing wastewater, etching wastewater, metal surface treatment plant wastewater, and ammonia synthesis plant wastewater.

The pH of these waters to be treated according to the present invention is usually about 8 to 12, and in order to set the pH to 7.5 or less, the addition of a pH adjusting agent is required.

### <pH Adjustment>

In the present invention, first, a pH adjusting agent is added to the water to be treated according to the present invention to adjust the pH to pH 7.5 or less. As described above, the pH of the water to be treated according to the present invention is usually 8 to 12, and therefore in order to set the pH to 7.5 or less, it is usually necessary to add an acid as a pH adjusting agent.

The acid used for the pH adjustment is not particularly limited, and an inorganic acid such as sulfuric acid or hydrochloric acid can be used.

The adjusted pH value is preferably low in terms of the cyanide removal effect and preferably pH 7 or less, but from the viewpoint of the cost of the pH adjusting agent and the viewpoint of safety in which when the pH is too low, free cyanide gasifies, the adjusted pH value is preferably 5 or more, more preferably 5.5 or more.

This pH adjustment is carried out by adding a pH adjusting agent to the water to be treated according to the present invention. From the viewpoint of stably and uniformly adjusting the water to be treated according to the present invention to a predetermined pH value, for example, it is preferred to provide a pH adjustment vessel, sufficiently stir and mix the water to be treated according to the present invention and a pH adjusting agent in the pH adjustment vessel, and subsequently subject the mixture to the following step of the reaction with a ferrous salt and a copper compound.

In order to uniformize and stabilize the pH value of the water to be treated according to the present invention, the residence time in the pH adjustment vessel is preferably about 5 to 60 min when the pH adjustment vessel is provided. When the mixing time can be sufficiently ensured, the pH adjusting agent can also be line-mixed into the water to be treated according to the present invention to adjust the pH.

### <Reaction with Ferrous Salt and Copper Compound>

In the present invention, as described above, a ferrous salt as a reducing agent is added to the water to be treated according to the present invention having pH value stabilized by previously adjusting the pH, and a copper compound is added to produce an insoluble salt of cyanide.

Examples of the ferrous salt include one or two or more inorganic ferrous salts such as ferrous sulfate, ferrous chloride, ferrous nitrate, ferrous bromide, ferrous phosphate, ferrous hydrogen carbonate, and ferrous carbonate. Among these, ferrous sulfate or ferrous chloride is preferably used from the viewpoint of being commercially inexpensively available.

The copper compound produces a copper(I) ion in the presence of the reducing agent, and generally a water-soluble salt is used. Such a copper compound may be a compound of copper(I) or a compound of copper(II). But generally, the compound of copper(I) is poorly soluble and not easily available, and therefore the compound of copper(II) is preferably used together with the ferrous salt, which is a reducing agent, reduced to a compound of copper(I), and reacted with the metal cyano complex and free cyanide.

As the compound of copper(II), a divalent copper salt such as water-soluble copper(II) sulfate, copper(II) chloride, or copper(II) nitrate can be utilized.

As the compound of copper(I), copper(I) chloride, copper(I) sulfate, or the like can be used.

One of these copper compounds may be used alone, or two or more of these copper compounds may be mixed and used.

It is preferred that the amount of the ferrous salt added to the water to be treated according to the present invention having pH adjusted is the amount required to bring the water to be treated into a reducing atmosphere, and specifically the ferrous salt is added under such a condition that the concentration of dissolved oxygen is 0.5 mg/L or less. For example, for such water to be treated that the concentration of dissolved oxygen shown in JIS K0102 32.3 is 6 mg/L, it is preferred that when the ferrous salt is ferrous sulfate, the amount of the ferrous salt added is about 50 to 100 mg/L as fineness, and that when the ferrous salt is ferrous chloride, the amount of the ferrous salt added is about 50 to 80 mg/L as fineness.

The amount of the copper compound added is usually equivalent or more based on the cyanide content in the water to be treated according to the present invention, but in order to increase the cyanide removal rate, an excessive amount of the copper compound is preferably added. It is preferred that the amount of the copper compound added is generally 1.05 to 1.5 equivalents, particularly 1.1 to 1.3 equivalents, based on the cyanide content in the water to be treated according to the present invention.

When the copper compound is excessively added, it is preferred that after the reaction, in order to remove the remaining copper compound, a heavy metal scavenger such as dithiocarbamic acid or piperazine is added to insolubilize copper as a complex, and it is removed together with the insoluble salt of cyanide.

The reaction in which after the pH adjustment, a ferrous salt and a copper compound are added to produce an insoluble salt of cyanide can be performed, for example, by introducing the water to be treated according to the present invention having pH adjusted to pH 7.5 or less into a reaction vessel and adding a ferrous salt and a copper compound. In order to reliably produce the insoluble salt of cyanide to highly remove cyanide, 1 min or more, for example, about 1 to 10 min, is preferably ensured for the residence time in this reaction vessel.

### <Solid-Liquid Separation>

After the reaction, the insoluble salt of cyanide produced is subjected to solid-liquid separation to obtain treated water.

Prior to this solid-liquid separation, an inorganic flocculant such as polyaluminum chloride and/or a polymer flocculant may be added to the reaction liquid to perform flocculation treatment. However, in the present invention, the ferrous salt added as a reducing agent forms Fe(OH)₃ sludge by the reduction reaction and forms the cores of flocs, and therefore the addition of an inorganic flocculant is not essential, and an inorganic flocculant is added according to the state of flocculation. A polymer flocculant is preferably added, followed by stirring and mixing to enlarge the flocs.

As the solid-liquid separation means, usually a settling vessel is used, but the solid-liquid separation means is not limited to a settling vessel in any way.

### [Apparatus for Treating Cyanide-Containing Water]

Next, an apparatus for treating cyanide-containing water according to the present invention will be described with reference to Figure 1.

Figure 1 is a system diagram showing one example of an embodiment of the apparatus for treating cyanide-containing water according to the present invention.

In this apparatus for treating cyanide-containing water, the water to be treated according to the present invention, which is raw water, is introduced into a pH adjustment vessel 1, an acid is added as a pH adjusting agent, and they are stirred by a stirrer 1B to adjust the pH to a predetermined pH of pH 7.5 or less. In Figure 1, the pH of the liquid in the pH adjustment vessel 1 is determined by a pH meter 1A, and the amount of the acid added is controlled based on this determined value to adjust the pH to a predetermined pH value.

The pH-adjusted water adjusted to a predetermined pH value of pH 7.5 or less in the pH adjustment vessel 1 is then fed to a reaction vessel 2, a ferrous salt and a copper compound are added under stirring by a stirrer 2B, and the copper compound is reacted with the metal cyano complex and the like under reducing conditions, and thus an insoluble salt of cyanide is produced.

The reaction liquid in the reaction vessel 2 is then subjected to solid-liquid separation in a settling vessel 3, and the separated water is taken out as treated water. The separated sludge is drawn out of the system and treated by a dewatering machine or the like. Reference character 3A denotes a stirrer.

An inorganic flocculant may be added to the reaction liquid from the reaction vessel 2 according to its state of flocculation, and further a polymer flocculant may be added to perform flocculation treatment. In this case, a flocculation vessel may be provided between the reaction vessel 2 and the settling vessel 3.

### Examples

The present invention will be more specifically described below by giving Examples.

### [Determination of Water Quality]

In the following Examples and Comparative Examples, the water quality of raw water and treated water was determined as follows.

### <Total Cyanide (CN)>

Determination was performed by the method described in JIS K0102-38.

For determination for cyanide-treated water, determination without dilution and determination with diluted water diluted 10-fold with distilled water were performed. For raw water, only determination with diluted water diluted 10-fold was performed. As described above, determination with diluted water is for decreasing the influence of an interfering component for total CN analysis in water, and the value obtained with 10-fold diluted water is taken as the "measured value", and the value obtained by increasing this measured value 10-fold is described as the "determined value".

### <Soluble Ions>

For Fe²⁺ Cu, and Zn, a filtrate obtained by filtering test water (raw water and treated water) through a 0.45 µm filter was analyzed. Fe²⁺ was analyzed by the o-phenanthroline colorimetric method. Cu and Zn were analyzed by the ICP emission analysis described in JIS K0102: 2013 52-4 and 53-3.

### <TIC Value>

Determination was performed by a TOC meter using the combustion oxidation-infrared TOC analysis method described in JIS K0102: 2013 22.1.

### <M alkalinity>

Determination was performed by the pH 4.8 acid consumption described in JIS K0102: 2013 15-1.

### [Examples 1 to 6]

Treatment was performed according to the present invention using cyanide-containing water (including free cyanide) having the following water quality as raw water.

### <Raw Water Quality>

pH: 8.0
Metal cyano complexes (ferrocyanide, zinc cyanide complex salt, and copper cyanide complex salt): 2.8 mg/L (content in terms of cyanide)
Total CN: 4.0 mg/L
Fe²⁺ 0.8 mg/L
Zn: 1.4 mg/L
Cu: 1.2 mg/L
TIC value: 220 mg-C/L
M alkalinity: 2400 mg-CaCO₃/L

First, in a pH adjustment vessel, sulfuric acid was added to the raw water to adjust the pH to a pH shown in Table 1. Then, the pH-adjusted water was fed to a reaction vessel, and in the reaction vessel, a ferrous salt shown in Table 1 as a reducing agent was added in an amount added shown in Table 1, and 130 mg/L of copper sulfate (CuSO₄) was added, and they were reacted under stirring to obtain cyanide-treated water. The residence time in the pH adjustment vessel was 5 min, and the residence time in the reaction vessel was 5 min. An amount of a ferrous salt added shown in Table 1 is an amount added in which the dissolved oxygen concentration in water determined by JIS K0102 32.3 is 0.5 mg/L. An amount of copper sulfate added is an amount added that is 0.7 equivalents based on cyanide in the raw water.

For the cyanide-treated water, the determination of water quality was performed by the methods, and the results are shown in Table 1.

In Examples 1 to 6 and the following Comparative Examples 1 to 6, copper sulfate (CuSO₄) is added as a 20% solution of CuSO₄·5H₂O, ferrous sulfate (FeSO₄) is added as a 20% solution, ferrous chloride (FeCl₂) is added as a 32% solution, and sodium bisulfite (NaHSO₃) is added as a 10% solution. In Table 1, the amounts added to the raw water as these solutions are shown.

### [Comparative Example 1]

pH adjustment with sulfuric acid was not performed, only sodium bisulfite (NaHSOs) was added as a reducing agent in an amount of 1000 mg/L, and the reaction was performed for 5 min. The water quality determination results of the obtained cyanide-treated water are shown in Table 1.

### [Comparative Example 2]

A reaction was performed in the same manner except that 130 mg/L of copper sulfate was added together with sodium bisulfite in Comparative Example 1. The water quality determination results of the obtained cyanide-treated water are shown in Table 1.

### [Comparative Example 3]

A reaction was performed in the same manner except that prior to the addition of sodium bisulfite and copper sulfate, sulfuric acid was added to adjust the pH to 5.5 in Comparative Example 2. The water quality determination results of the obtained cyanide-treated water are shown in Table 1.

### [Comparative Example 4]

A reaction was performed in the same manner as Example 1 except that pH adjustment with sulfuric acid was not performed. The water quality determination results of the obtained cyanide-treated water are shown in Table 1.

### [Comparative Example 5]

A reaction was performed in the same manner as Example 3 except that copper sulfate was not added. The water quality determination results of the obtained cyanide-treated water are shown in Table 1.

### [Comparative Example 6]

400 mg/L of ferrous sulfate as a reducing agent and 130 mg/L of copper sulfate were added to the raw water, and sulfuric acid was added to adjust the pH to 6.5, and the reaction was performed for 5 min. The water quality determination results of the obtained cyanide-treated water are shown in Table 1.

**[Table 1]**

| | | Pretreatment adjustment value | Reducing agent | | Amount of copper sulfate added [mg/L] | Water quality of treated water (mg/L) | | | | | | | |
|---|---|---|---|---|---|---|---|---|---|---|---|---|---|
| | | | Type | Amount added [mg/L] | | Total CN | | | Fe²⁺ | Zn | Cu | TIC value *1 | M alkalinity *2 |
| | | | | | | Without dilution | 10-Fold dilution | | | | | | |
| | | | | | | | Determined value | Measured value | | | | | |
| Raw water | | 8.0 | - | - | - | - | 4.0 | 0.4 | 0.8 | 1.2 | 1.4 | 220 | 2400 |
| Comparative Examples | 1 | 8.0 | NaHSOs | 1000 | 0 | 0.83 | 4.0 | 0.4 | - | - | - | 210 | 2200 |
| | 2 | 8.0 | NaHSOs | 1000 | 130 | 0.81 | 2.3 | 0.23 | - | 0.5 | 0.3 | 210 | 2200 |
| | 3 | 5.5 | NaHSOs | 1000 | 130 | 1.13 | 1.5 | 0.15 | - | 0.5 | 0.3 | 48 | 530 |
| | 4 | 8.0 | FeSO₄ | 400 | 130 | 2.14 | 2.2 | 0.22 | <0.1 | 0.5 | 0.4 | 210 | 2300 |
| | 5 | 6.5 | FeSO₄ | 400 | 0 | - | 3.4 | 0.22 | 10.4 | | 0.2 | 55 | 580 |
| | 6 | *3 | FeSO₄ | 400 | 130 | 1.38 | 1.3 | 0.13 | 1.2 | 0.5 | 0.3 | 150 | 1500 |
| Examples | 1 | 7.5 | FeSO₄ | 400 | 130 | 0.95 | 1.2 | 0.12 | 0.34 | 0.4 | 0.3 | 75 | 750 |
| | 2 | 7.0 | FeSO₄ | 400 | 130 | 0.95 | <1.0 | <0.1 | 0.54 | 0.2 | <0.1 | 62 | 710 |
| | 3 | 6.5 | FeSO₄ | 400 | 130 | 0.79 | <1.0 | <0.1 | 0.64 | <0.1 | <0.1 | 58 | 650 |
| | 4 | 7.5 | FeCl₂ | 150 | 130 | 0.91 | 1.1 | 0.11 | 0.36 | 0.4 | 0.3 | 72 | 740 |
| | 5 | 7.0 | FeCl₂ | 150 | 130 | 0.88 | <1.0 | <0.1 | 0.55 | 0.2 | <0.1 | 55 | 590 |
| | 6 | 6.5 | FeCl₂ | 150 | 130 | 0.75 | <1.0 | <0.1 | 0.66 | <0.1 | <0.1 | 48 | 520 |

| | | | | | | | | | | | | | |
|---|---|---|---|---|---|---|---|---|---|---|---|---|---|
| *1: the unit is "mg-C/L" *2: the unit is "mg-CaCOs/L" *3: the pH is adjusted to 6.5 during the addition of the reducing agent and copper sulfate | | | | | | | | | | | | | |

### [Consideration]

From the results in Table 1, the following are found.

Comparative Example 1 is a system to which sodium bisulfite is simply added. Apparently, it seems as if the total CN can be decreased even with only sodium bisulfite, but when the dilution operation is performed, the total CN concentration of the treated water is the same as the raw water, and it can be said that cyanide can not be removed with sodium bisulfite. It is considered that the CN analysis value is different with and without dilution in this manner because the analysis of the total CN is interfered with by sulfurous acid gas included in sodium bisulfite, but when the concentration of sodium bisulfite decreases due to the dilution operation, and the analysis of the total CN is not influenced by sulfurous acid gas, the intrinsic CN concentration is analyzed.

Comparative Examples 2 and 3 are each a conventional method in which treatment is performed by adding sodium bisulfite as a reducing agent to reduce copper sulfate to a copper(I) ion. When the treated water is diluted, and the influence of sodium bisulfite is decreased, a phenomenon in which the total CN concentration increases is seen, and it is found that the total CN remains.

In Comparative Example 4, ferrous sulfate and copper sulfate are added with an alkaline condition of pH 8.0, but it is found that under a pH alkaline condition, a sufficient CN removal effect is not obtained.

It is found that even if the pH is adjusted to pH 6.5 as in Comparative Example 6, a sufficient CN removal effect is not obtained either by pH adjustment performed simultaneously with the addition of ferrous sulfate and copper sulfate.

In contrast to these, in Examples 1 to 6, by previously adjusting the pH to pH 7.5 or less, the CN removal effect improved as the pH became lower. Particularly at 7.0 or less, good CN-attained water quality was obtained. In addition, unlike the cases where sodium bisulfite was used for the reducing agent, the analysis of the total CN was not interfered with, nor was a phenomenon in which the total CN analysis value changed greatly with and without dilution seen, and substantially equal values were obtained.

In addition, in Comparative Example 4, no remaining Fe²⁺ ion is seen, whereas in Examples 1 to 6, the remaining of Fe²⁺ is seen. Therefore, it is considered that under a pH alkaline condition, Fe²⁺ does not stabilize, and the Fe²⁺ of the added ferrous salt forms Fe³⁺ and forms Fe(OH)₃. That is, by lowering the pH, the Fe²⁺ ion stabilizes, the ferrous salt acts as a reducing agent for Cu¹⁺, and the treated water CN-attained water quality can be kept well.

Comparative Example 5 is the conventional Prussian blue method, but it was difficult to obtain sufficient cyanide-attained water quality at pH 6.5.

From these results, it is found that according to the present invention, cyanide in cyanide-containing water including a metal cyano complex and including a large amount of inorganic carbon can be highly removed to obtain high water quality treated water in which the total CN concentration is sufficiently decreased.

The present invention has been described in detail using particular modes, but it is apparent to those skilled in the art that various changes can be made without departing from the intent and scope of the present invention.

This application is based on Japanese Patent Application No. 2020-138789 filed on August 19, 2020, the entirety of which is incorporated by reference.

### Reference Signs List

- 1: pH adjustment vessel
- 2: reaction vessel
- 3: settling vessel

## Claims

1. A method for treating cyanide-containing water, comprising:
adding a pH adjusting agent to cyanide-containing water comprising a metal cyano complex and comprising inorganic carbon at 100 mg-C/L or more in terms of TIC measurement value measured by a TOC meter described in section 22, JIS K0102 to adjust pH to pH 7.5 or less;
adding a ferrous salt as a reducing agent and adding a copper compound; and
separating an insoluble salt of cyanide produced.

2. An apparatus for treating cyanide-containing water, comprising:
pH adjusting means that adds a pH adjusting agent to cyanide-containing water comprising a metal cyano complex and comprising inorganic carbon at 100 mg-C/L or more in terms of TIC measurement value measured by a TOC meter described in section 22, JIS K0102 to adjust pH to pH 7.5 or less;
a reaction vessel in which a ferrous salt as a reducing agent is added to water having pH adjusted by the pH adjusting means, and a copper compound is added for a reaction; and
solid-liquid separation means that separates an insoluble salt of cyanide produced in the reaction vessel.
